Europäisches Patentamt

European Patent Office

Office européen des brevets

(11) Veröffentlichungsnummer: **0 456 976 A2**

# (12) EUROPÄISCHE PATENTANMELDUNG

(21) Anmeldenummer: 91103341.3

(51) Int. Cl.⁵: **B23K 9/22**

(22) Anmeldetag: 06.03.91

(30) Priorität: 18.05.90 DE 4015956

(43) Veröffentlichungstag der Anmeldung:
21.11.91 Patentblatt 91/47

(84) Benannte Vertragsstaaten:
**BE FR GB NL**

(71) Anmelder: **ISOTOPEN-TECHNIK DR.
SAUERWEIN GMBH
Bergische Strasse 16
W-5657 Haan/Rheinl. 1(DE)**

(72) Erfinder: **Streckenbach, Gerd
Stefenshovener Strasse 42
W-4018 Langenfeld(DE)**

Erfinder: **Simon, Wolfgang
Asternstrasse 32
W-5600 Wuppertal 1(DE)**
Erfinder: **Nuding, Wolfgang, Dr.
Am Gerstenkamp 8
W-5210 Troisdorf(DE)**
Erfinder: **Link, Rainer, Dr.
Buchenhöhe 1
W-5014 Kerpen-Horrem(DE)**

(74) Vertreter: **König, Reimar, Dr.-Ing. et al
Patentanwälte Dr.-Ing. Reimar König
Dipl.-Ing. Klaus Bergen Wilhelm-Tell-Strasse
14 Postfach 260162
W-4000 Düsseldorf 1(DE)**

(54) Verfahren und Vorrichtung zum Verschliessen einer metallischen Kapsel und zum Verschweissen mit einem Metallkabel.

(57) Verfahren und Vorrichtung zum dichten Verschließen einer mittels eines Stopfens (2) verschlossenen metallischen Kapsel (1) und zum Verbinden der Kapsel mit einem Metallkabel (5) durch Lichtbogenschweißen, bei dem ein Kondensator (29) aufgeladen, die mit einer Zündspitze (8) versehene Kapsel oder der mit einer Zündspitze (4) versehene Stopfen und das Kabel mit ihren Enden eingespannt, mit den Polen des Kondensators (29) elektrisch verbunden, aufeinanderzu bewegt und durch die Kondensatorentladung unter Bildung eines Lichtbogens miteinander verschweißt werden.

## Fig.1

EP 0 456 976 A2

Die Erfindung betrifft ein Verfahren und eine Vorrichtung zum dichten Verschließen einer mittels eines Stopfens verschlossenen Kapsel und zum Verbinden der Kapsel mit einem Metallkabel durch Lichtbogenschweißen.

Eine derartige Kapsel ist beispielsweise in der US-Patentschrift 4 861 520 beschrieben; sie wird mit radioaktiven Pellets gefüllt, mit einem Stopfen verschlossen, und anschließend wird der Stopfen mit der Kapsel durch Elektronen- oder Laserstrahlschweißen verbunden. Danach wird ebenfalls mittels Laser- oder Elektronenstrahl das Kabel mit dem Stopfen verschweißt. Da der Durchmesser derartiger Strahler, die in der medizinischen Strahlentechnik in Nachladegeräten eingesetzt werden, bei 1 bis 3 mm liegt, ist es schwierig, die Schweißverbindung so herzustellen, daß sie den Vorschriften bezüglich Abreißfestigkeit genügt. Hierzu müssen die Kapsel, der Stopfen und das Kabel in Haltern gegeneinandergeführt und während des Schweißvorganges um 360° gedreht werden, damit die Schweißnaht den gesamten Umfang der Kapsel umfaßt und einen absolut dichten Anschluß gewährleistet. Das Elektronenstrahlschweißen muß zudem unter Vakuum durchgeführt werden. Ein derartiges Schweißen ist daher langwierig und kostspielig.

Der Erfindung liegt die Aufgabe zugrunde, ein Verfahren und eine Vorrichtung zum dichten Verschließen einer beispielsweise mit Pellets aus radioaktivem Material gefüllten metallischen Kapsel und zum Verbinden der Kapsel mit einem flexiblen Metallkabel zu schaffen, das sich einfach und kontrolliert, d.h. reproduzierbar, durchführen läßt, einen geringen Zeitaufwand erfordert und zu einer Kostenverminderung führt.

Die Lösung dieser Aufgabe besteht darin, daß bei einem Verfahren der eingangs erwähnten Art erfindungsgemäß durch Lichtbogenschweißen mit Kondensatorentladung zwischen einer Zündspitze an der Kapsel oder dem Stopfen und dem Kabelende durch die Kondensatorentladung ein Lichtbogen gezündet und die Zündspitze mit dem Kabelende verschweißt wird. Dabei brauchen die Zündspitze und das Kabelende lediglich aufeinanderzu bewegt zu werden.

Vorzugsweise läuft das Verfahren so ab, daß zunächst die Kapsel mit den radioaktiven Pellets gefüllt, mit dem Stopfen verschlossen und verpreßt und schließlich das Kabel mit dem Stopfen und der Stopfen mit der Kapsel in einem Arbeitsgang verschweißt werden.

Es ist jedoch auch möglich, das Verfahren so ablaufen zu lassen, daß das Kabel mit der Kapsel verschweißt, dann die Kapsel gefüllt, mit dem Stopfen verschlossen und schließlich der Stopfen mit der Kapsel verschweißt werden.

Schließlich ist es auch möglich, die Kapsel zu füllen, mit dem Stopfen zu verschließen, Stopfen und Kapsel und anschließend das Kabel mit der Kapsel zu verschweißen.

In allen Fällen verläuft der Schweißvorgang in der Weise, daß ein Kondensator aufgeladen wird und die Pole des Kondensators mit den zu verschweißenden Teilen elektrisch verbunden werden. Die zu verschweißenden Teile werden aufeinanderzu bewegt, wobei entweder die Spannung an den beiden Teilen bereits anliegt, bevor die Zündspitze des einen Teils mit dem anderen Teil in Berührung kommt, oder aber die Spannung des Kondensators wird angelegt, nachdem die Zündspitze das andere Teil bereits berührt. In beiden Fällen fließt ein hoher Strom durch die Zündspitze, die schmilzt und verdampft, so daß ein Spalt entsteht, in dem sich der Lichtbogen bildet. Dieser Lichtbogen bewirkt das Schmelzen der Enden der miteinander zu verbindenden Teile und erlischt, wenn die Enden einander berühren und das Schweißgut ineinander fließt. Zu diesem Zeitpunkt wird die Bewegung unterbrochen, so daß sich die Schmelze abkühlt und erstarrt.

Um zu verhindern, daß das Schweißgut oxydiert, kann das Schweißen unter Schutzgas ablaufen.

Besonders vorteilhaft ist es, wenn der Schweißvorgang gesteuert so abläuft, daß die zu verschweißenden Teile aufeinanderzu bewegt werden, mit dem Zünden des Lichtbogens ein Zeitelement eingeschaltet wird, die Bewegung während der Anfangsphase des Schweißens nach Zünden des Lichtbogens so gesteuert wird, daß die Lichtbogenstrecke in Abhängigkeit vom Abschmelzvorgang gleich bleibt, dann die Bewegung kurz beschleunigt wird, so daß sich die geschmolzenen Enden berühren, das Schweißgut ineinander fließt und der Lichtbogen erlischt, daß die Bewegung unterbrochen wird bis die Schweißnaht abgekühlt und die Schmelze erstarrt ist.

Durch einen derartig gesteuerten Schweißverlauf läßt sich ein kontrolliertes und reproduzierbares Verschweißen der Kapsel mit dem Stopfen und des Stopfens mit dem Kabel erreichen, das allen Anforderungen gerecht wird.

Die Ladespannung des Kondensators kann bei etwa 40 V liegen, während der Stromimpuls beim Zünden auf etwa 250 A begrenzt sein sollte. Mit diesen Werten läßt sich trotz der Kleinheit der Teile ein kontrolliertes Verschweißen durchführen, ohne daß die radioaktiven Pellets in Mitleidenschaft gezogen werden.

Die erfindungsgemäße Vorrichtung besteht vorteilhafterweise aus einem ferngesteuerten Manipulator aus einer ferngesteuerten, mit einem Pol des Kondensators verbundenen Spannzange für das Kabel, einer zweiten, koaxial dazu auf einem Schlitten angeordneten und verschiebbaren, mit dem anderen Pol des Kondensators verbundenen Spannzange für die Kapsel, einem Verschiebeantrieb für die Kapselzange sowie einer Steuerung mit einem Zeitelement zum Einleiten und Steuern des Schweißvorganges und des Verschiebeantriebs.

Im Bereich der Spannzangen kann eine Abdeckhaube mit einer Schutzgaszufuhr angeordnet sein.

Die Erfindung wird nachstehend anhand mehrerer in der Zeichnung dargestellter Ausführungsbeispiele des näheren erläutert. In der Zeichnung zeigen:

Fig. 1 eine Kapsel mit Stopfen vor dem Verschweißen mit einem Kabel

Fig. 2 eine Kapsel mit unabhängig vom Kabel angeordneten Stopfen

Fig. 3 eine mit dem Stopfen und dem Kabel verschweißte Kapsel und

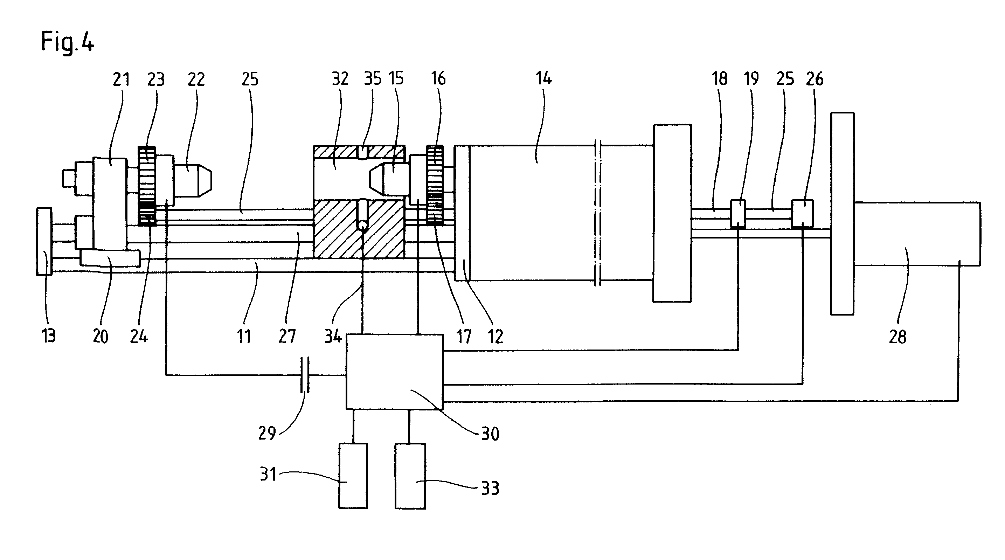

Fig. 4 eine Vorrichtung zur Durchführung des erfindungsgemäßen Verfahrens.

Die Kapsel 1 besitzt ein abgerundetes geschlossenes Ende und einen Hohlraum, in dem sich Pellets 6 aus radioaktivem Material, zum Beispiel Iridium 192, befinden. Die Öffnung der Kapsel 1 ist mittels eines Stopfens 2 verschlossen; ein abgesetzter Zapfen 3 des Stopfens 2 ragt in die Rohrung der Kapsel 1. Der Zapfen 3 ist mit der Kapsel verpreßt, um ein Herausfallen des Stopfens zu verhindern und einen guten elektrischen Kontakt zwischen der Kapsel 1 und dem Stopfen 2 zu gewährleisten. Eine Zündspitze 4 des Stopfens 2 ist gegen das freie Ende eines Kabels 5 gerichtet.

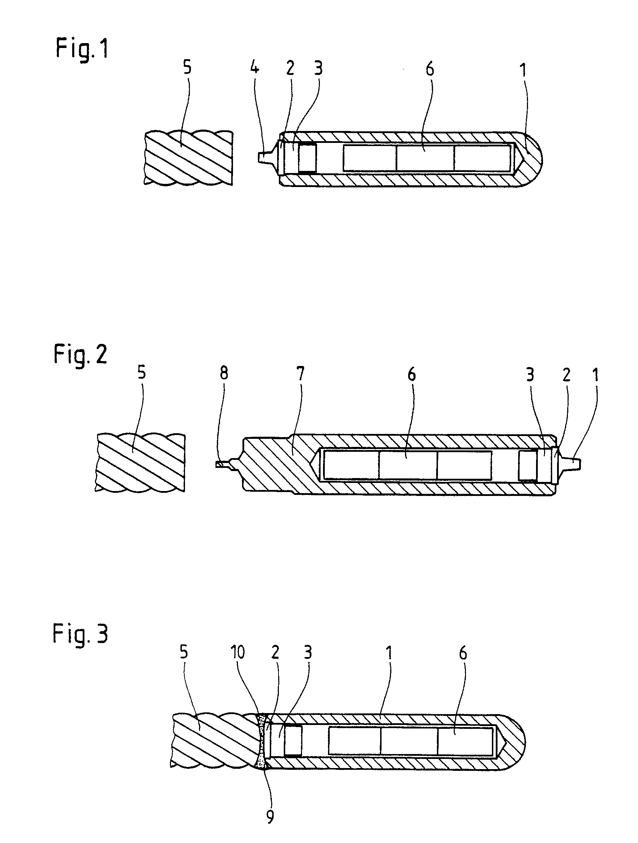

Beim Ausführungsbeispiel gemäß Fig. 2 weist die Kapsel 7 selbst eine gegen das Kabel 5 gerichtete Zündspitze 8 auf und ist ebenfalls mittels eines Stopfens 2 und dessen Zapfen 3 verschlossen. Dieser Stopfen 2 weist ebenfalls eine Zündspitze 4 auf. Bei dem Ausführungsbeispiel gemäß Fig. 2 kann entweder die Kapsel 7 zunächst mit dem Kabel 5 verschweißt werden, um anschließend mit den Pellets 6 gefüllt, mit dem Stopfen 2 verschlossen und verschweißt werden, oder die Kapsel 7 wird mit den Pellets 6 gefüllt, mit dem Stopfen 2 verschlossen und verschweißt, wonach die Kapsel 7 mit dem Kabel 5 verschweißt wird.

In dem Lichtbogen zwischen dem Kabel 5 und dem Stopfen 2 oder dem Kabel 5 und der Kapsel 7 sowie der Kapsel 7 mit dem Stopfen 2 und einer entsprechenden Gegenelektrode schmelzen die Enden der Kapsel 1, 7, des Stopfens 2 und des Kabels 5 so auf, daß sich eine kugelförmige flüssige Zone bildet. Wenn sich die Enden der zu verbindenden Teile berühren, fließt das Schweißgut infolge der Oberflächenspannung ineinander, so daß sich nach dem Abkühlen und Erstarren eine feste Schweißverbindung 9 zwischen der Kapsel und dem Stopfen 2 sowie eine Schweißverbindung 10 zwischen dem Kabel und dem Stopfen 2 ergibt.

Zum Durchführen des erfindungsgemäßen Schweißverfahrens dient eine Schweißvorrichtung aus einem Bett mit einer Führung 11. An den Enden des Bettes 11 sind Seitenteile 12 und 13 angeordnet. Eine Bleiabschirmung 14 schützt die Bedienungsperson vor der von den zu verschweißenden Teilen ausgehenden radioaktiven Strahlung. Im Seitenteil 12 ist eine Spannzange 15 angeordnet, die zum Beispiel das Kabel 5 aufnehmen kann. Über Zahnräder 16, 17, eine Antriebswelle 18 und einen Antriebsmotor 19 läßt sich die Spannzange 15 spannen und lösen.

Ein Schlitten 20 ist auf dem Bett 11 verschiebbar angeordnet und weist einen Träger 21, mit einer Spannzange 22 auf. Auch diese Spannzange 22 läßt sich über Zahnräder 23, 24, eine Antriebswelle 25 und einen Antriebsmotor 26 lösen und spannen. Der Schlitten 20 läßt sich über eine Spindel 27 und einen Antriebsmotor 28 verschieben.

Mit den Spannzangen 15, 22 sind über ein Steuergerät 30 die Pole eines Kondensators 29 verbunden. Dieses Steuergerät 30 steuert nach einem vorgegebenen Programm die Antriebsmotoren 19, 26 der Spannzangen 15, 22 und den Antriebsmotor 28 für den Vorschub der Spannzange 22 an. Des weiteren ist das Steuergerät 30 mit einem Schutzgasbehälter 33 verbunden, von dem aus eine Schutzgasleitung 34 zu einer Abdeckhaube 32, und einer Entlüftungsbohrung 35 führt. Ein Zeitelement 31 ist mit dem Steuergerät 30 verbunden und läßt den Schweißvorgang auf folgende Weise ablaufen:

Nachdem das Kabel 5 in die Spannzange 15 so eingesetzt ist, daß das Ende etwa 2 mm hervorragt und in gleicher Weise in die Spannzange 22 die Kapsel 1 mit dem Stopfen 2 eingesetzt ist, wird über einen Tastendruck das Steuergerät 30 eingeschaltet und spannt die Spannzangen 15, 22 über die Antriebsmotoren 19, 26. Daraufhin wird die Spannzange 22 mittels des Antriebsmotors 28 und der Spindel 27 in die Abdeckhaube 32 hineingefahren, bis die Zündspitze 4 des Stopfens 2 das Ende des Kabels 5 berührt. Nunmehr wird Schutzgas aus dem Schutzgasbehälter 33 durch die Schutzgasleitung 34 in die Abdeckhaube 32 geführt und verdrängt die darin befindliche Luft, die aus der Entlüftungsbohrung 35 austritt. Danach wird der Strom eingeschaltet und der Kondensator 29 entladen. Der Maximalstrom wird durch einen Vorwiderstand begrenzt. Im vorliegenden Fall wird ein Vorwiderstand von 0,15 Ohm benutzt, so daß bei einer Ladespannung des Kondensators von 40 V der Stromimpuls beim Zündvorgang Werte von 250 A erreicht. Nach dem Zünden bildet sich ein Lichtbogenplasma aus, das den Stromfluß weiter begrenzt.

Durch das Zünden des Lichtbogens wird das Zeitelement 31 eingeschaltet. Während der ersten 75 % der Schweißzeit fährt die Spannzange 22 auf die Spannzange 15 mit einer Geschwindigkeit zu, die so bestimmt ist, daß die Lichtbogenstrecke in Abhängigkeit vom Abschmelzvorgang gleich bleibt. Noch bevor der Kondensator völlig entladen ist, wird die Bewegung der Spannzange 22 kurz beschleunigt, damit sich die konvexen, flüssigen Zonen der Teilenden berühren können. Das Schweißgut fließt ineinander, und die Spannung bricht zusammen. Es fließt kein Strom mehr, und die Abkühl- und Erstarrungsphase beginnt. In dieser Zeit läßt sich durch Einstellen der Beschleunigungs- und der anschließenden Bremsphase die Form der Schweißnaht etwas beeinflussen, so daß sich weder ein Wulst durch zu starkes Gegeneinanderschieben, noch eine Einschnürung infolge eines zu schnellen Abbremsens bildet.

Um eine einwandfreie Schweißverbindung zu erhalten, müssen die verschiedenen Parameter wie Schweißspannung und Schweißstrom sowie die Geschwindigkeit der Spannzange 22 während der einzelnen Phasen des Schweißvorganges an die zu verschweißenden Teile angepaßt werden. Dies läßt sich durch eine Programmsteuerung mittels eines Mikroprozessors im Steuergerät 30 erreichen.

## Patentansprüche

1. Verfahren zum dichten Verschließen einer mittels eines Stopfens verschlossenen metallischen Kapsel und zum Verbinden mit einem Metallkabel durch Lichtbogenschweißen, dadurch gekennzeichnet, daß zwischen einer Zündspitze an der Kapsel oder dem Stopfen und dem Kabelende durch Entladen eines Kondensators ein Lichtbogen gezündet und die Zündspitze mit dem Kabelende verschweißt wird.

2. Verfahren nach Anspruch 1, dadurch gekennzeichnet, daß die Kapsel gefüllt, mit dem Stopfen verschlossen und verpreßt sowie das Kabel mit dem Stopfen und der Stopfen mit der Kapsel in einem Arbeitsgang verschweißt wird.

3. Verfahren nach Anspruch 1, dadurch gekennzeichnet, daß das Kabel mit dem einen Kapselende verschweißt, dann die Kapsel am anderen Ende gefüllt, mit dem Stopfen verschlossen und schließlich der Stopfen mit der Kapsel verschweißt wird.

4. Verfahren nach Anspruch 1, dadurch gekennzeichnet, daß die Kapsel gefüllt, an einem Ende mit dem Stopfen verschlossen und verschweißt und anschließend das Kabel mit dem anderen Ende der Kapsel verschweißt werden.

5. Verfahren nach einem der Ansprüche 1 bis 4, dadurch gekennzeichnet, daß das Schweißen in einer Schutzgasatmosphäre durchgeführt wird.

6. Verfahren nach einem der Ansprüche 1 bis 5, dadurch gekennzeichnet, daß die zu verschweißenden Teile aufeinander zu bewegt werden, mit dem Zünden des Lichtbogens ein Zeitelement eingeschaltet wird, die Bewegung während des Schweißens nach Zünden des Lichtbogens so gesteuert wird, daß die Lichtbogenstrecke gleichmäßig brennt, daß dann die Bewegung kurz beschleunigt wird, bis sich die geschmolzenen Enden berühren, das Schweißgut ineinanderfließt und der Lichtbogen erlischt, daß die Bewegung unterbrochen wird, bis die Schweißnaht abgekühlt und die Schmelze erstarrt ist.

7. Verfahren nach Anspruch 6, dadurch gekennzeichnet, daß der Entladestrom durch einen Vorwiderstand begrenzt wird.

8. Vorrichtung zum dichten Verschließen einer mittels eines Stopfens verschlossenen metallischen Kapsel und zum Verbinden der Kapsel mit einem Metallkabel durch Schweißen, gekennzeichnet durch einen ferngesteuerten Manipulator aus einer ferngesteuerten, mit einem Pol eines Kondensators (29) verbundenen Kabelspannzange (15), einer koaxial dazu auf einem Schlitten (20) angeordneten und verschiebbaren mit dem anderen Pol des Kondensators (29) verbundenen Kabelspannzange (22), einem Verschiebeantrieb (27, 28) für die Kabelspannzange (22) sowie einem Steuergerät (30) mit einem Zeitelement (31) zum Einleiten und Steuern des Schweißvorgangs und des Verschiebeantriebs (27, 28).

9. Vorrichtung nach Anspruch 8, gekennzeichnet durch eine Abdeckhaube (32) mit einer Schutzgaszufuhr (34).

Fig.1

Fig.2

Fig.3

Fig. 4